# EUROPEAN PATENT APPLICATION

(11) **EP 2 584 190 A2**
(43) Date of publication of application: **24.04.2013**
(21) Application number: 12188486.0
(22) Date of filing: 15.10.2012
(51) Int. Cl.: F03D 1/00, E04H 12/34, B66C 1/10

(54) **Hoisting Nacelle and Tower**

(30) Priority: 18.10.2011 US 201113275687
(71) Applicant: General Electric Company, Schenectady, NY 12345 (US)
(72) Inventor: Nies, Jacob Johannes, 8042 HA Zwolle (NL)
(74) Representative: Bedford, Grant Richard

(57) **Abstract**

According to the present disclosure, a method for hoisting one or more tower sections (12, 25) of a wind turbine (10) or one or more tower sections (12, 25) of a wind turbine (10) preassembled to a nacelle (16), wherein the one or more tower sections (12, 25) include an uppermost flange (310, 320, 330, 340), is provided. The method includes: attaching one or more linking elements (19) to the one or more tower sections (12, 25) at or below the uppermost flange (310, 320, 330, 340); and hoisting the one or more tower sections (12, 25) of a wind turbine (10) or one or more tower sections (12, 25) of a wind turbine (10) preassembled to the nacelle (16) using a hoisting machine (130) that is connected with the one or more tower sections (12, 25) by the one or more linking elements (19).

## Description

The subject matter described herein relates generally to methods and systems for wind turbines, and more particularly, to methods and systems for lifting one or more tower sections of a wind turbine, or one or more tower sections of a wind turbine preassembled to a nacelle in on- and offshore environments.

In general, the electricity generated from wind by the construction and operation of clean, environmental and resource friendly wind turbines may be referred to as on- or offshore wind power depending on the environment in which the wind turbine is operating. Installing wind turbines in such environments usually requires specialized equipment and machinery such as lifting cranes capable of hoisting bulky objects with heavy loads.

Onshore, wide open spaces that are sparsely populated and have strong prevailing winds, usually provide excellent locations for installing wind turbines with a high Annual Energy Production (AEP). Additionally, maintenance is more convenient in such environments due to easy site accessibility.

However, there is also a tendency towards offshore wind power since it finds greater acceptance in communities than conventional onshore wind power. Reasons for this are the generally higher and more constant wind speeds or wind resource characteristics found in offshore environments. These wind conditions cause an increase in terms of electric energy produced per wind turbine. Further advantages are that in such environments the noise development, physical and visual obstruction of wind turbines poses fewer problems to the local communities.

At least some known wind turbines include a tower and a nacelle mounted on the tower. A rotor is rotatably mounted to the nacelle and is coupled to a generator by a shaft. A plurality of blades extend from the rotor. The blades are oriented such that wind passing over the blades turns the rotor and rotates the shaft, thereby driving the generator to generate electricity.

Assembling such large wind turbines, intended for on- or offshore use is usually done in various ways. Wind turbines developed for onshore use are usually assembled on site where the wind turbine will operate.

Since the installation of wind turbines in offshore environments is typically done in calm weather conditions, rapidly changing weather and ocean swell may cause the window for installation of wind turbines to be brief and limited.

In general, costs for transport and installation of wind turbines are relatively high compared to their AEP. Partly, this is due to the specialized and expensive equipment necessary for transport and assembly of wind turbines. For instance, installing the often more than 100 m high wind turbines, which may also have rotor diameters of more than 80 m is typically done using specialized and expensive lifting cranes. These cranes should be capable of hoisting loads of many hundreds of tons, since the wind turbine nacelle on its own may weigh more than 120 tons. The length of dead times, i.e. the time until which weather and swell conditions are suitable for installation, may cause the retention time or on-call time for such equipment to be very long - this consequentially directly influences installation costs.

Further, maintenance and in exceptional cases decommissioning of wind turbines may rapidly add to the costs. This is particularly the case for open water environments, which are generally not as accessible as environments on land and where installations of some wind turbines have required more than one lifting crane.

Hence, it will be appreciated that a simple, cost and time efficient method for assembling or installing wind turbines in on- as well as offshore environments is desired. The subject matter described herein pertains to such a method, amongst other things, by reducing the time and equipment necessary for the installation or eventual decommissioning of wind turbines.

In one aspect, according to the present invention, method for hoisting one or more tower sections of a wind turbine, wherein the one or more tower sections include an uppermost flange is provided. The method includes: attaching one or more linking elements inside the one or more tower sections below the uppermost flange; and hoisting the one or more tower sections using a hoisting machine that is connected with the one or more tower sections by the one or more linking elements.

In another aspect, a method for hoisting one or more tower sections of a wind turbine preassembled to a nacelle, wherein the one or more tower sections include an uppermost flange is provided. The method includes: attaching one or more linking elements inside the one or more tower sections at or below the uppermost flange; and hoisting the one or more tower sections preassembled with a nacelle using a hoisting machine that is connected with the one or more tower sections by the one or more linking elements.

In yet another aspect, a wind turbine tower section is provided. The tower section includes a flange and one or more attaching elements, wherein the attaching elements are attached on the inside of the tower section below an uppermost flange.

Various of the methods described herein facilitate hoisting one or more tower sections of a wind turbine or one or more tower sections of a wind turbine preassembled to a nacelle in on- or offshore environments. Particularly, one or more tower sections of a wind turbine or one or more tower sections of a wind turbine preassembled to a nacelle are hoisted by one, two, three or more linking elements that are attached at or below the uppermost flange or pair of flanges. Thereby, the lifting load on the portions of the wind turbine above the attachment points of the linking elements is effectively absent.

Since tower flanges are typically designed to take loads of a higher magnitude than the lifting loads, the linking elements may be attached to such flanges at or below the uppermost flange of a tower section. Attachment of the linking elements may be done by attaching elements, which are for instance lifting lugs that are permanently or removably attached to the flanges. In particular, compared to known hoisting methods, loading the lower flanges with the weight avoids that the thinner and more fragile upper tower parts carry the entire tower or turbine load during hoisting. The hoisting method described herein may be used to assemble or erect, maintain or disassemble wind turbines in a quick and cost efficient manner.

Various aspects, advantages and features of the present invention are apparent from the dependent claims, the description and the accompanying drawings, in which:
Fig. 1 is a perspective view of an exemplary wind turbine.
Fig. 2 is an enlarged sectional view of a portion of the wind turbine shown in Fig. 1.
Fig. 3 is a schematic drawing showing a method for hoisting a wind turbine with a linking element attached inside a tower section according to embodiments described herein.
Fig. 4 is a schematic drawing showing a further aspect of the method for hoisting a wind turbine with linking elements attached to the inside of a tower section according to embodiments described herein.
Fig. 5 is a schematic drawing showing another aspect of the method for hoisting a partly preassembled wind according to embodiments described herein.
Fig. 6 is a schematic drawing showing the method of hoisting multiple tower sections of a wind turbine with a linking element attached to the inside of a tower section according to embodiments described herein.
Fig. 7 is a schematic drawing showing the method of hoisting multiple tower sections of a wind turbine with linking elements attached to the inside of a tower section according to further embodiments described herein.
Fig. 8 is a schematic cross-sectional drawing of the wind turbine nacelle and tower section showing an attachment of the linking elements and position of the guiding elements according to embodiments described herein.
Fig. 9 is a schematic cross-sectional drawing of the wind turbine nacelle and tower section showing an attachment of the linking elements and position of the guiding elements according to further embodiments described herein.
Fig. 10 is a schematic cross-sectional drawing of the wind turbine nacelle and tower section illustrating the displacement of the gear box and/or electric generator according to embodiments described herein.
Fig. 11 is a schematic cross-sectional drawing of the wind turbine tower section showing an attachment of the linking elements and position of the guiding elements according to embodiments described herein.
Fig. 12 is a schematic cross-sectional drawing of the wind turbine tower section showing an attachment of the linking elements and position of the guiding elements according to further embodiments described herein.
Fig. 13 to 16 are schematic drawings of the attaching elements and their position of attachment inside the one or more tower sections of a wind turbine according to further embodiments herein.
Fig. 17 and 18 are schematic drawings of the guiding elements according to embodiments herein.
Fig. 19 is a flow chart showing blocks of the method for hoisting the one or more tower sections of a wind turbine or one or more tower sections of a wind turbine preassembled to the nacelle according to embodiments described herein.

Reference will now be made in detail to the various embodiments, one or more examples of which are illustrated in each figure. Each example is provided by way of explanation and is not meant as a limitation. For example, features illustrated or described as part of one embodiment can be used on or in conjunction with other embodiments to yield yet further embodiments. It is intended that the present disclosure includes such modifications and variations.

As used herein, the term "wind turbine" is intended to be representative of any device that generates rotational energy from wind energy, and more specifically, converts kinetic energy of wind into mechanical energy. As used herein, the term "blade" is intended to be representative of any device that provides a reactive force when in motion relative to a surrounding fluid.

As used herein, the term "craft" is intended to be representative of any vessel capable of transporting a wind turbine or, one or more tower sections thereof. However, the term "craft" may also be representative of a vessel capable of transporting any one or more of hoisting machine or lifting equipment. Additionally, the wind turbine or, one or more tower sections thereof and one or more of the lifting machine or equipment may be transported by a single vessel. As used herein, the term "hoisting machine" is intended to be representative of any machine or device capable of hoisting a wind turbine or, one or more tower sections thereof.

As used herein, the term "wind generator" is intended to be representative of any wind turbine that generates electrical power from rotational energy generated from wind energy, and more specifically, converts mechanical energy converted from kinetic energy of wind to electrical power.

As used herein, the term "uppermost flange" is intended to be representative of the upper most flange or pair of flanges of the uppermost wind turbine tower section.

As used herein, the term "linking element" is intended to be representative of any one or more of for example lifting cables, chains, slings or any one ore more hoisting aids such as for instance rods and cross bars.

As used herein, the term "attaching element" is intended to be representative of any feature, such as for example lifting lugs that enable attachment of the linking elements to the nacelle or tower section as described herein.

As used herein, the term "top edge" is intended to be representative of the uppermost edge of one or more tower sections of a wind turbine, which are in the upright position. The term "below the top edge" is intended to be representative of the location below the uppermost edge of one or more tower sections, which are in the upright position.

As used herein, the term "guiding elements" is intended to be representative of elements that are capable of guiding the linking elements to their place of attachment or capable of exerting a perpendicular force to the linking elements. Such guiding elements usually do not support loads in the vertical direction, i.e. the guiding elements are typically not designed for being points of attachment for the linking elements and therefore are generally not able to carry the loads of one or more tower sections of a wind turbine, or one or more tower sections of a wind turbine preassembled to a nacelle during the hoisting process. However, in exceptional cases the guiding elements may be designed to withstand heavy loads of, for example, at least one of the tower sections. The guiding elements, further, may secure the linking elements in position. Additionally, they usually are capable of withstanding large horizontal forces exerted on them by for example the linking elements. The routing angle of the linking elements may be up to 60°, more typically 15° or less.

Assembling and installing large multi-megawatt wind turbines, for use in offshore environments may be done in a few different ways. For example, wind turbines may be pre-assembled fully or partially ashore (i.e. inland or close to the coast) and brought to their offshore site of operation by a transport and installation craft and then, if necessary, assemblage is completed on site. Alternatively, wind turbines may be fully assembled on site, i.e. the wind turbine parts may be transported by a craft and assembled fully on site.

The embodiments described herein include a cost effective wind turbine hoisting method that allows hosting one or more tower sections of a wind turbine, or one or more tower sections of a wind turbine preassembled to a nacelle by attaching linking elements inside the one or more tower sections, at or below the uppermost flange or pair of flanges of the one or more tower sections. Further, embodiments described herein, enable hoisting only the nacelle of a wind turbine by attaching the linking elements inside the nacelle or by guiding the linking elements through the inside of the nacelle and attaching them at the bottom of or below the nacelle. The load on the more fragile upper portions of the wind turbine nacelle or, in particular on the uppermost flange of one or more tower sections may be reduced.

In the art, wind turbines are often hoisted by attaching the linking elements above the yaw bearing. When hoisting a wind turbine or one or more tower sections of a wind turbine preassembled to the nacelle with linking elements attached below or at the uppermost flange or pair of flanges of the uppermost tower section according to embodiments described herein, the effect of overloading the yaw bearing when it has to carry the tower weight from the top may be avoided.

In addition, the hoisting method described herein is not only helpful if one lifts nacelle with one or more tower sections attached to it but also, for instance, if one or more tower sections (not yet attached to the nacelle) are hoisted. In such a case, loading a lower flange with the weight removes any tensile stress from the thinner upper flange(s). A further advantage includes that the amount of flanges used in the wind turbine tower may be reduced due to a better load distribution on the tower sections and in particular due to a reduced load on connected flanges of the tower sections during the lifting process.

Additionally, this hoisting method allows a single hook-lift with a single crane. Existing methods for hoisting wind turbines typically include two cranes. Since a fully pre-assembled wind turbine may be hoisted by the method herein, the time required for installation, maintenance and repair of wind turbines may be reduced. For instance, one could move the fully assembled wind turbine, which includes the attached rotors to a harbor where it may be mounted on a foundation, repaired or tested before being transported offshore and installed at its site of operation. Further advantages are: reduced volume and weight of assembling equipment, which, for instance, results from the possibility of using only one crane to perform the hoisting method described herein. This aspect is particularly relevant in offshore scenarios, since in such cases, the assembling equipment needs to be transported to the site where the wind turbine is installed for operation.

Since the hoisting method described herein may employ just a single crane it is very cost effective, especially, when installing wind turbines in on- or, more particularly, offshore wind farms. Wind farms are typically numerous wind turbines spaced apart. According to an aspect, a method for erecting a plurality of wind turbines in a wind farm or a method, particularly beneficial for serial use is disclosed.

Before using the present hoisting method, the one or more tower sections of a wind turbine, or one or more tower sections of a wind turbine preassembled to a nacelle or preassembled wind turbine (eventually including a foundation or support system) or nacelle of a wind turbine, if necessary, are brought into an upright position. Depending on the accessibility to the attaching elements, linking elements may be attached to the tower section or nacelle during pre-assembly or before the hoisting process is started. Further, linking elements may be attached to the tower section or nacelle before or after the one or more tower sections of a wind turbine, or one or more tower sections of a wind turbine preassembled to a nacelle or preassembled wind turbine (eventually including a foundation or support system) or nacelle of a wind turbine have been brought into the upright position.

In a further embodiment, the guiding elements may be designed to withstand exceptionally heavy loads. For instance, in the case where the guiding elements and the linking elements are attached to the tower section before hoisting the one or more tower sections of a wind turbine, or one or more tower sections of a wind turbine preassembled to a nacelle or preassembled wind turbine (eventually including a foundation or support system) from a horizontal or non-vertical position. In such an instance, the guiding elements should be capable of carrying the load of the one or more tower sections of a wind turbine or one or more tower sections of a wind turbine preassembled to a nacelle or preassembled wind turbine (eventually including a foundation or support system) whilst they are maneuvered into a vertical position.

In some embodiments, linking elements are guided by guiding elements, of which non-limiting examples include pulleys or rollers. The guiding elements can be positioned or attached, permanently or removably on or below the top edge of a wind turbine tower section or on the in- or outside of the nacelle. Further, the linking elements or guiding elements may be interconnected inside or above a tower section, or inside or above the nacelle of a wind turbine. Furthermore, the guiding elements may not be connected to a tower section or nacelle such that guiding of the linking elements may take place without touching the tower, nacelle or any other machinery of the wind turbine.

In general, employing guiding elements reduces the amount of strain or wear on the linking elements, which is caused by contact with parts of the wind turbine during the hoisting process. In addition, excessive bending of the linking elements due to obstructing parts of the one or more tower sections of a wind turbine, or one or more tower sections of a wind turbine preassembled to a nacelle or preassembled wind turbine (eventually including a foundation or support system) may be avoided. The chance of damaging the one or more tower sections of a wind turbine, or one or more tower sections of a wind turbine preassembled to a nacelle or preassembled wind turbine (eventually including a foundation or support system) may be reduced. Furthermore, reduced horizontal reaction forces are induced on the linking elements due to the guiding elements that may be positioned to reduce the angle at which the linking elements are attached to the tower section or nacelle.

The one or more tower sections of a wind turbine or one or more tower sections of a wind turbine preassembled to a nacelle or preassembled wind turbine (eventually including a foundation or support system) or nacelle of a wind turbine may be lifted using a hoisting machine such as, but not limited to a lifting crane. The linking elements may be attached to the hoisting machine by one or more lifting hooks. Further embodiments include the use of a spreader, for example in the form of a spreader beam. The spreader beam may function as a stabilizing element during the hoisting process and also provides spaced apart attachment points for the linking elements.

In one embodiment, a method of hoisting one or more tower sections of a wind turbine as described herein or, one or more tower sections of a wind turbine preassembled to a nacelle includes attaching linking elements below the uppermost flange of the one or more tower sections.

It is possible to attach one or more of the linking elements to the one or more tower sections of a wind turbine or one or more tower sections of a wind turbine preassembled to a nacelle or the nacelle of a wind turbine below the center of gravity. In such a caser, the partly assembled or fully assembled wind turbine or one or more tower sections thereof or nacelle may need to be stabilized in the vertical direction. For this purpose, a non-limiting example for stabilizing the partly assembled or fully assembled wind turbine or one or more tower sections thereof or nacelle includes, attaching the guiding element above the center of gravity.

Further embodiments for stabilizing one or more tower sections of a wind turbine or one or more tower sections of a wind turbine preassembled to a nacelle or the nacelle of a wind turbine during the hoisting process with linking elements attached below the center of gravity is to ensure equilibrium of moments around the two axes.

Furthermore, when attaching one of the guiding elements above the center of gravity and the other below the center of gravity, both offset from the vertical axis of the centre of gravity, the equilibrium of moments around the horizontal axis should be ensured to enable vertical stabilization of the one or more tower sections of a wind turbine or one or more tower sections of a wind turbine preassembled to a nacelle or nacelle of a wind turbine that is/are being hoisted.

All of the above embodiments with regard to attaching the linking elements to the tower section or nacelle may employ two or more linking elements, which are positioned between the shackle of the hoisting machine and the one or more tower sections or nacelle of a wind turbine.

In further embodiments, specialized guiding elements, which for example surround the tower section on the outside or inside may be employed. Such guiding elements may stabilize the wind turbine or one or more tower sections thereof in the vertical position and guide the linking elements.

When the linking elements are attached inside of a tower section, care should be taken whilst positioning them, especially in the case when hoisting a fully pre-assembled wind turbine. It may generally be necessary that the linking elements are brought through the nacelle into the tower section. To facilitate access of the linking elements to the tower section, the nacelle may be displaced from a functional to a temporarily non-functional position.

In particular, for instance, one or more of the gear box, yaw system, converters, platforms or electric generator in the nacelle may be displaced to facilitate the entry of the linking elements into the tower section or into or below the nacelle. One or more of the gear box, yaw system, converters, platforms or electric generator may be replaced before the hoisting process begins. Detaching the linking elements after the hoisting process has completed, may again require displacing and replacing said wind turbine elements. Wind turbine elements may be replaced after the hoisting process has completed and once the linking elements have been removed from the nacelle.

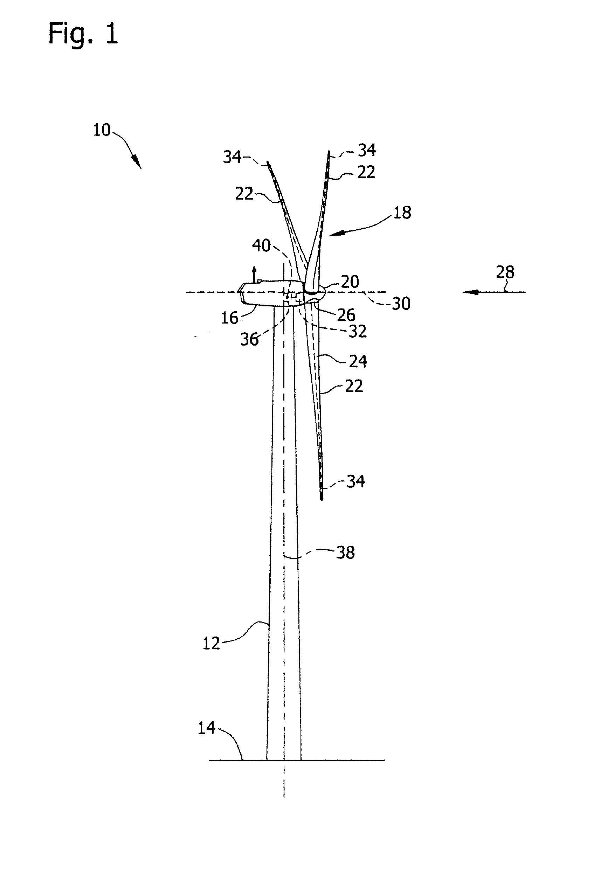

Fig. 1 is a perspective view of an exemplary wind turbine 10. In the exemplary embodiment, wind turbine 10 is a horizontal-axis wind turbine. Alternatively, wind turbine 10 may be a vertical-axis wind turbine. In the exemplary embodiment, wind turbine 10 includes a tower 12 that extends from a support system 14, a nacelle 16 mounted on tower 12, and a rotor 18 that is coupled to nacelle 16. Rotor 18 includes a rotatable hub 20 and at least one rotor blade 22 coupled to and extending outward from hub 20. In the exemplary embodiment, rotor 18 has three rotor blades 22. In an alternative embodiment, rotor 18 includes more or less than three rotor blades 22. In the exemplary embodiment, tower 12 is fabricated from tubular steel to define a cavity (not shown in Fig. 1) between support system 14 and nacelle 16. In an alternative embodiment, tower 12 is any suitable type of tower having any suitable height.

Rotor blades 22 are spaced about hub 20 to facilitate rotating rotor 18 to enable kinetic energy to be transferred from the wind into usable mechanical energy, and subsequently, electrical energy. Rotor blades 22 are mated to hub 20 by coupling a blade root portion 24 to hub 20 at a plurality of load transfer regions 26. Load transfer regions 26 have a hub load transfer region and a blade load transfer region (both not shown in Fig. 1). Loads induced to rotor blades 22 are transferred to hub 20 via load transfer regions 26.

In one embodiment, rotor blades 22 have a length ranging from about 15 meters (m) to about 91 m. Alternatively, rotor blades 22 may have any suitable length that enables wind turbine 10 to function as described herein. For example, other non-limiting examples of blade lengths include 10 m or less, 20 m, 37 m, or a length that is greater than 91 m. As wind strikes rotor blades 22 from a direction 28, rotor 18 is rotated about an axis of rotation 30. As rotor blades 22 are rotated and subjected to centrifugal forces, rotor blades 22 are also subjected to various forces and moments. As such, rotor blades 22 may deflect and/or rotate from a neutral, or non-deflected, position to a deflected position.

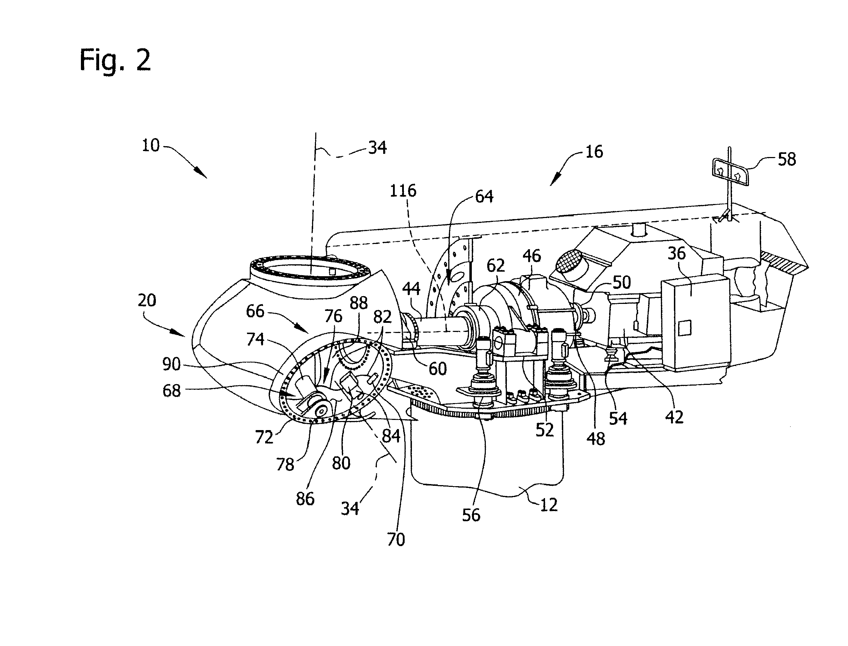

Fig. 2 is an enlarged sectional view of a portion of wind turbine 10. In the exemplary embodiment, wind turbine 10 includes nacelle 16 and hub 20 that is rotatably coupled to nacelle 16. More specifically, hub 20 is rotatably coupled to an electric generator 42 positioned within nacelle16 by rotor shaft 44 (sometimes referred to as either a main shaft or a low speed shaft), a gearbox 46, a high speed shaft 48, and a coupling 50. In the exemplary embodiment, rotor shaft 44 is disposed coaxial to longitudinal axis 116. Rotation of rotor shaft 44 rotatably drives gearbox 46 that subsequently drives high speed shaft 48. High speed shaft 48 rotatably drives generator 42 with coupling 50 and rotation of high speed shaft 48 facilitates production of electrical power by generator 42. Gearbox 46 and generator 42 are supported by a support 52 and a support 54. In the exemplary embodiment, gearbox 46 utilizes a dual path geometry to drive high speed shaft 48. Other variants include one, or more preferably 3 or more planetary gears employed to drive the high speed shaft 48. Alternatively, rotor shaft 44 is coupled directly to generator 42 with coupling 50.

Nacelle 16 also includes a yaw drive mechanism 56 that may be used to rotate nacelle 16 and hub 20 on yaw axis 38 (shown in Fig. 1) to control the perspective of rotor blades 22 with respect to direction 28 of the wind. Nacelle 16 also includes at least one meteorological mast 58 that includes a wind vane and anemometer (neither shown in Fig. 2). Mast 58 provides information to control system 36 that may include wind direction and/or wind speed. In the exemplary embodiment, nacelle 16 also includes a main forward support bearing 60 and a main aft support bearing 62.

Forward support bearing 60 and aft support bearing 62 facilitate radial support and alignment of rotor shaft 44. Forward support bearing 60 is coupled to rotor shaft 44 near hub 20. Aft support bearing 62 is positioned on rotor shaft 44 near gearbox 46 and/or generator 42. Alternatively, nacelle 16 includes any number of support bearings that enable wind turbine 10 to function as disclosed herein. Rotor shaft 44, generator 42, gearbox 46, high speed shaft 48, coupling 50, and any associated fastening, support, and/or securing device including, but not limited to, support 52 and/or support 54, and forward support bearing 60 and aft support bearing 62, are sometimes referred to as a drive train 64.

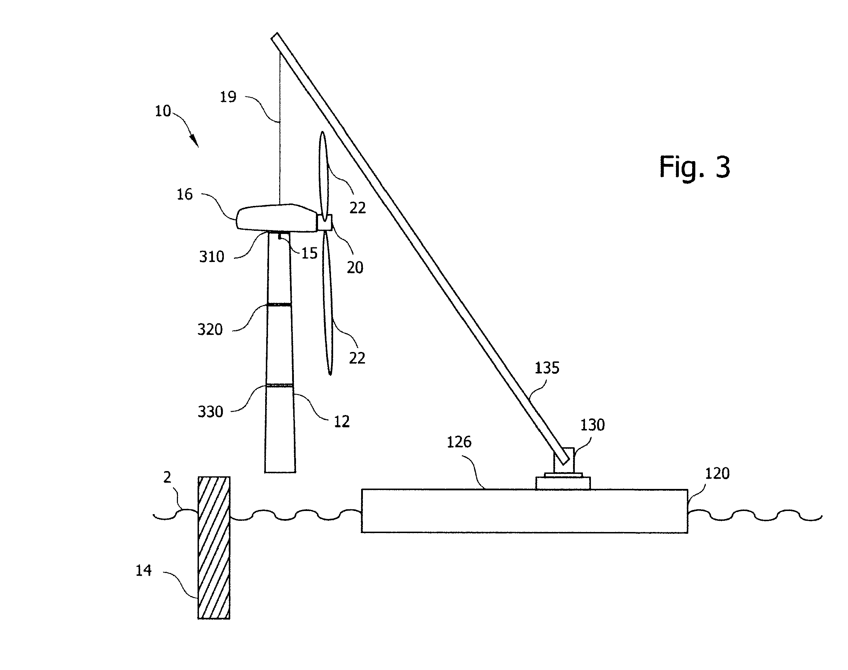

Fig. 3 shows hoisting pre-assembled wind turbine 10 in an offshore environment according to some embodiments described herein. Wind turbine 10 may be pre-assembled ashore and transported by a craft 120 over a body of water 2 to its offshore destination. Wind turbine 10 may be transported in an upright position, which may facilitate the hoisting method in offshore environments. Usually, a support system 14, which anchors the wind turbine to a particular location, is provided. Once arrived at the location of installation, linking element 19 is brought into position inside a tower section of wind turbine 10. Linking element 19 may be attached inside the tower section before transport, or during or after pre-assembly of the wind turbine.

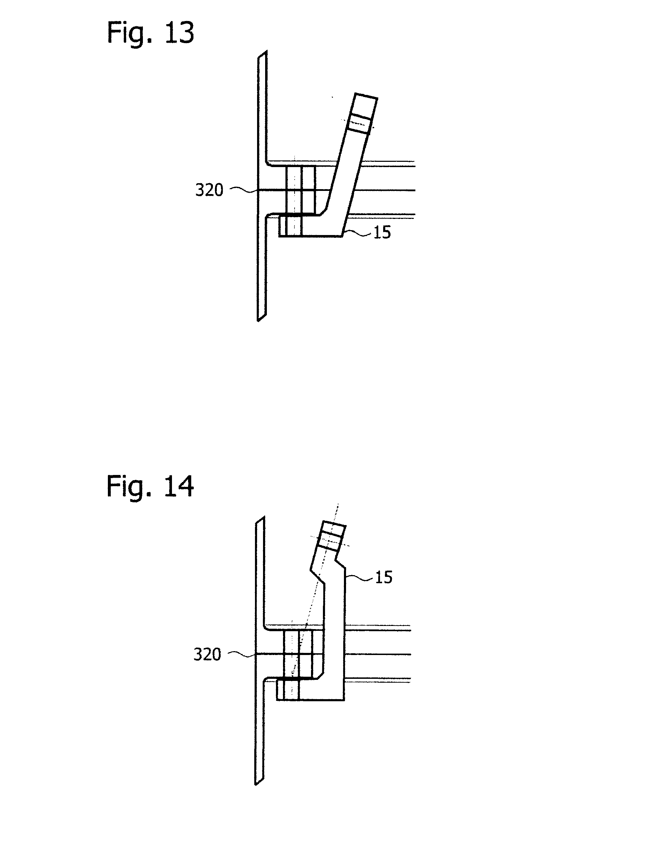

Not limited to the embodiment of Fig. 3, linking element 19 is attached to uppermost flange 310 of the uppermost tower section of wind turbine 10. Non-limiting examples of attachment include lifting lugs or cross beams as shown in Fig. 13 to 16, described in more detail below. Usually, the lugs or cross beams include a straight drilling to which one applies a D-shackle. The linking element may be attached to the D-shackle by lifting aids, such as for instance lifting hooks. Further, lifting lugs 15 may be attached permanently to the tower section or removed after installation. Permanent installations typically include welding attaching elements to a portion of a tower section, whereas removable installations typically include screwing attaching elements to a portion of a tower section, such as for instance to a flange.

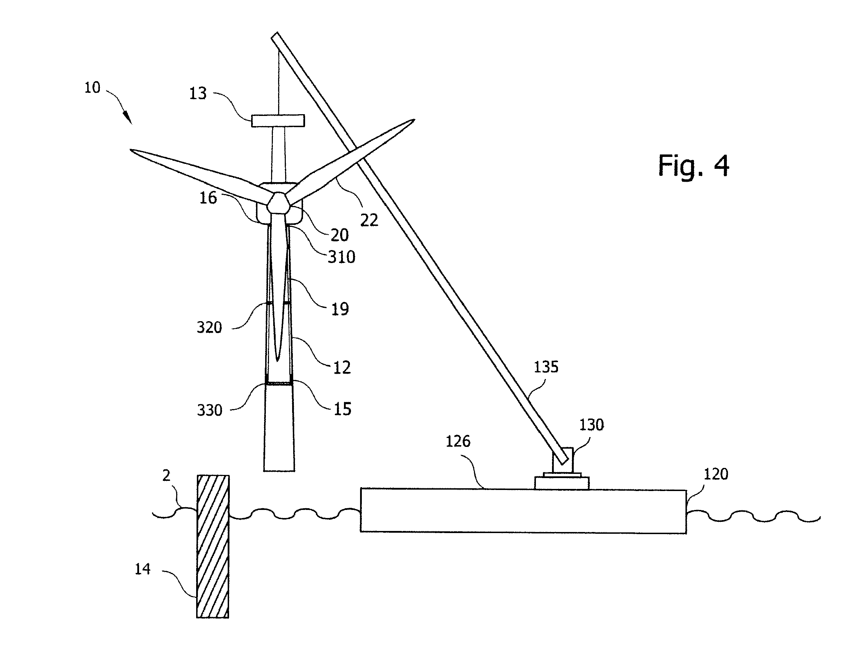

Fig. 4 shows how wind turbine 10 is hoisted in an offshore environment. Lifting elements 19 are attached to the inside, and below uppermost flange 310 of wind turbine tower 12. The linking elements 19 are attached to lifting lugs 15. The lifting lugs are permanently or removably attached, in this particular embodiment, to the third flange 330. A spreader 13 may be used during the hoisting process. Further embodiments may include attaching the linking elements inside the bottom, middle or top section of the tower.

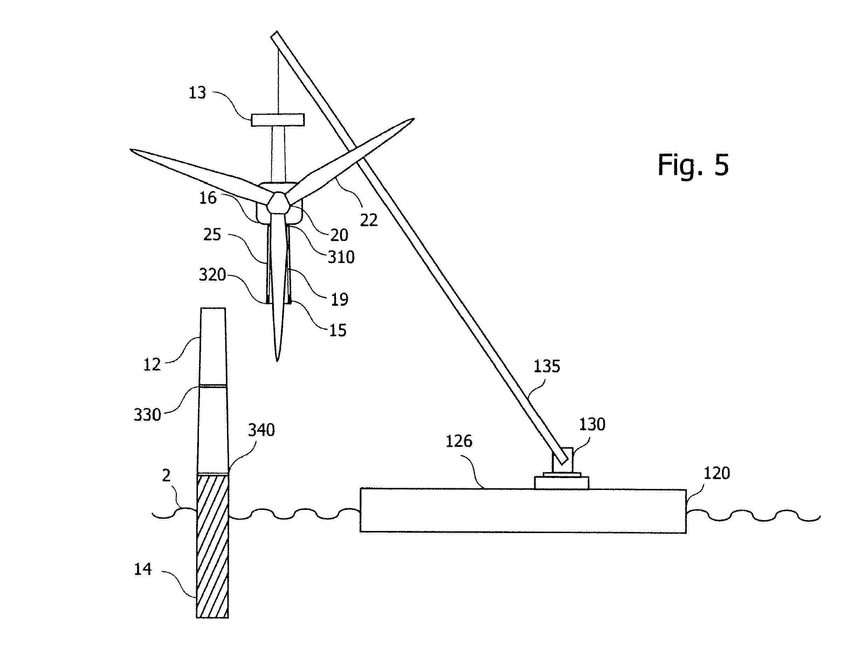

Fig. 5 shows how one tower section 25 preassembled to nacelle 16 is hoisted in an offshore environment. Nacelle 16 includes rotor hub 20 and rotor blades 22, which are preassembled ashore or on deck 126 before or after transport to the site of operation of the wind turbine. Linking elements 19 are attached to lifting lugs 15, which are permanently or removably attached to flange 320. A spreader 13 may be used to ensure that the lifting point is vertically above the center of gravity of the one tower section 25 preassembled to nacelle 16.

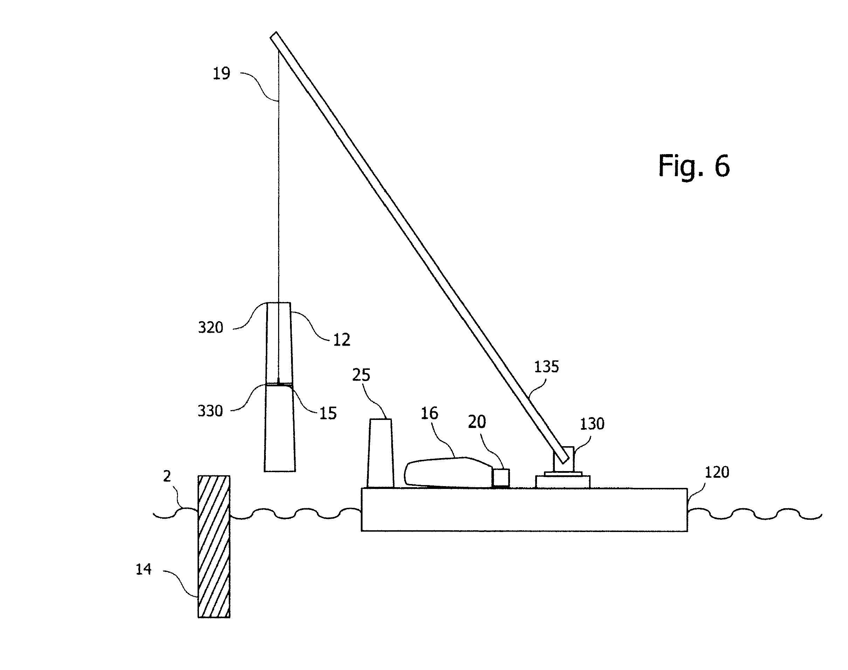

Fig. 6 shows how a wind turbine is partly assembled on site, offshore at the location of its operation. In this case, two tower sections are hoisted using linking element 19. According to embodiments, linking element 19 is attached via lifting lugs 15 to flange 330 inside the shown tower section 12. The tower section 12 consists of two pre-assembled tower sections. During hoisting, flange 330 carries the entire load whilst flange 320 or any flange above flange 330 experiences no tensile stress. After tower section 12 has been brought into position on support system 14, a similar hoisting method is used to bring tower section 25, pre-assembled nacelle 16 and rotor hub 20, and rotor blades 22 (not shown in Fig. 6) into position. These wind turbine parts may either be brought into position separately or pre-assembled ashore or on deck 126 and hoisted as such.

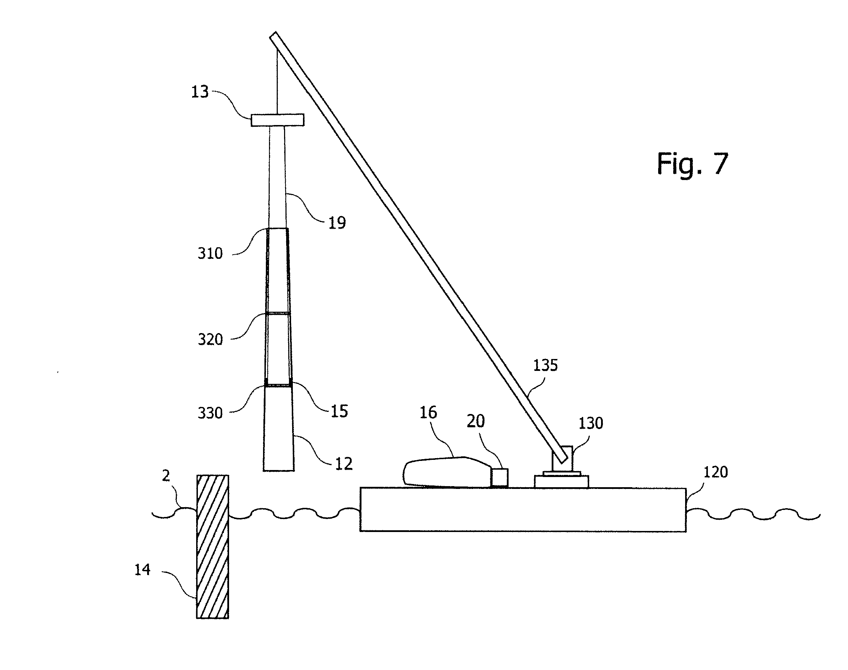

Fig. 7 shows how a wind turbine is partly assembled on site, offshore at the location of its operation. In this case, three tower sections preassembled to each other are hoisted. Linking elements 19 attach to the inside of the tower section 12. Lifting lugs 15 are permanently or removably attached to the third flange 330. A spreader 13 may be used in order to minimize horizontal forces of linking elements 19 from acting on tower section 12.

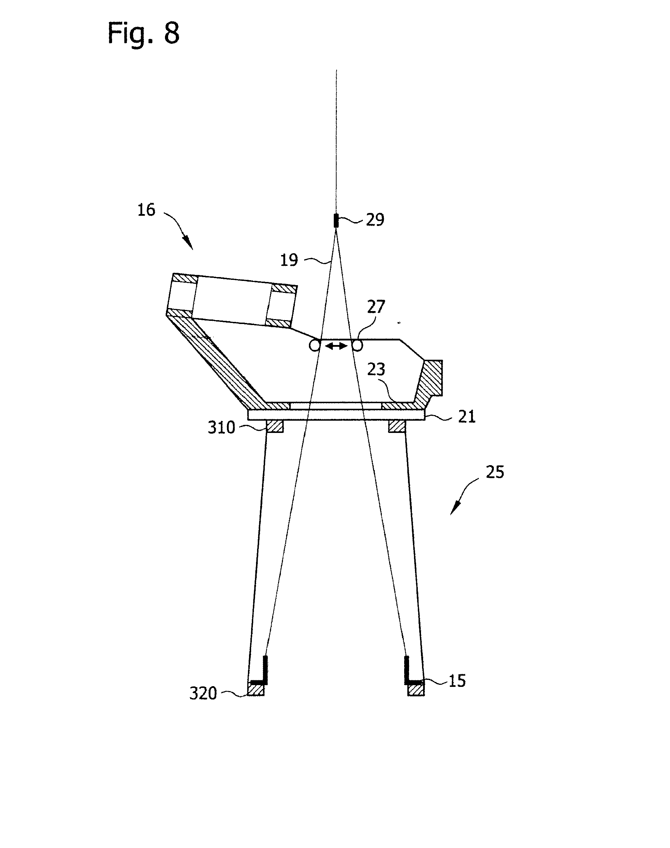

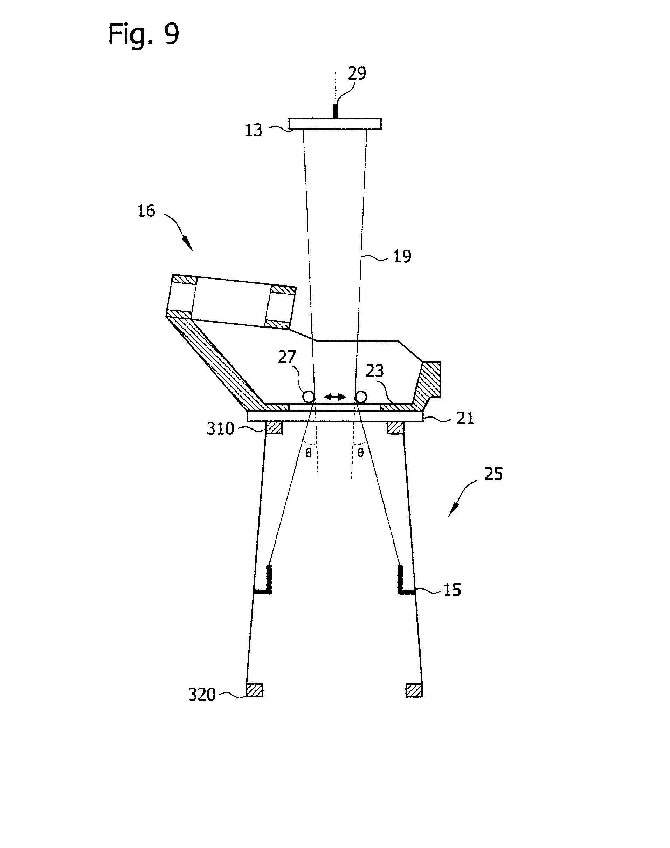

Figs. 8 and 9 are cross-sectional illustrations of nacelle 16 and upper tower section 25 of wind turbine 10, showing in more detail how linking elements 19 can be positioned inside the tower section for hoisting a pre-assembled wind turbine or parts thereof. With respect to Fig. 8, according to some embodiments, the wind turbine or parts thereof are suspended from a crane arm using a single lifting hook 29. Linking elements 19 are brought into position and attached inside of tower section 25. Linking elements 19 go through yaw bearing 23 and base plate 21, if any, into the tower and are attached to the tower via lifting lugs 15. Lifting lugs 15 may be positioned on, above or below flange 320.

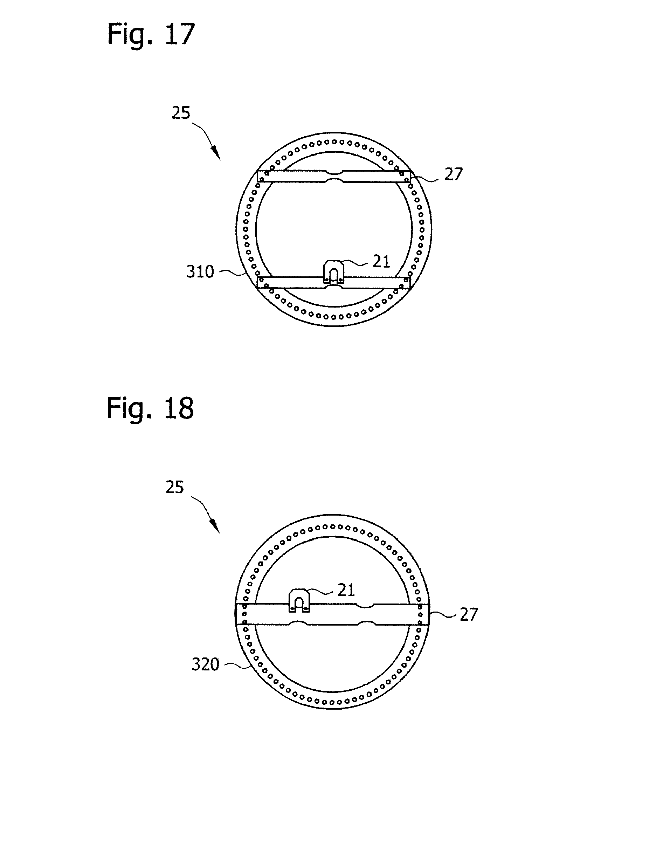

One or more guiding elements 27 may be positioned anywhere within or on top of nacelle 16 to direct and maintain linking elements 19 in a predetermined position. Guiding elements such as for instance cross bars may be attached to yaw bearing 23. Figures 17 and 18, described in more detail below, illustrate examples of how the linking elements may be kept in position during the hoisting method. Further, the use of guiding elements may reduce the likelihood of damage caused to the wind turbine or linking elements, for example due to friction at unwanted contact points between wind turbine and linking elements. In addition, guiding elements 27 may be positioned in such a way that linking elements 19 avoid obstacles within nacelle 16.

Fig. 9 shows a further embodiment, wherein lifting lugs 15 are attached away from flange 320 closer to nacelle 16. In further embodiments, attaching elements may be attached further down the wind turbine tower. However, in such cases the force introduction on the tower wall may need to be compensated by for example increasing the wall thickness of the tower or by providing an extra flange to which the attaching elements may be attached. By default in the embodiments herein, the attaching elements are usually attached to pre-existing stiffening members such as for instance a pre-existing flange or pair of flanges.

High theta routing angles (θ) may increase the strain on guiding elements 27 or on linking elements 19. Horizontal forces exerted on linking elements are usually reduced when the linking elements are attached further down the tower. Theta angles (θ) may be optimized by changing the horizontal spacing between guiding elements 27 or their vertical position within nacelle 16. However, the theta angle (θ) lies between 0 and 30 degrees and more preferably between 0 and 10 degrees.

Linking elements 19 may be attached to a spreader 13, as illustrated in Fig. 9, which may be suspended from the lifting crane via a single lifting hook 29. The spreader may help to reduce horizontal forces on the linking elements 19 and stabilize the wind turbine during the hoisting process. The wind turbine is stabilized by bringing the lifting point vertically above the center of gravity. This is achieved by making the two arms of the spreader different in length.

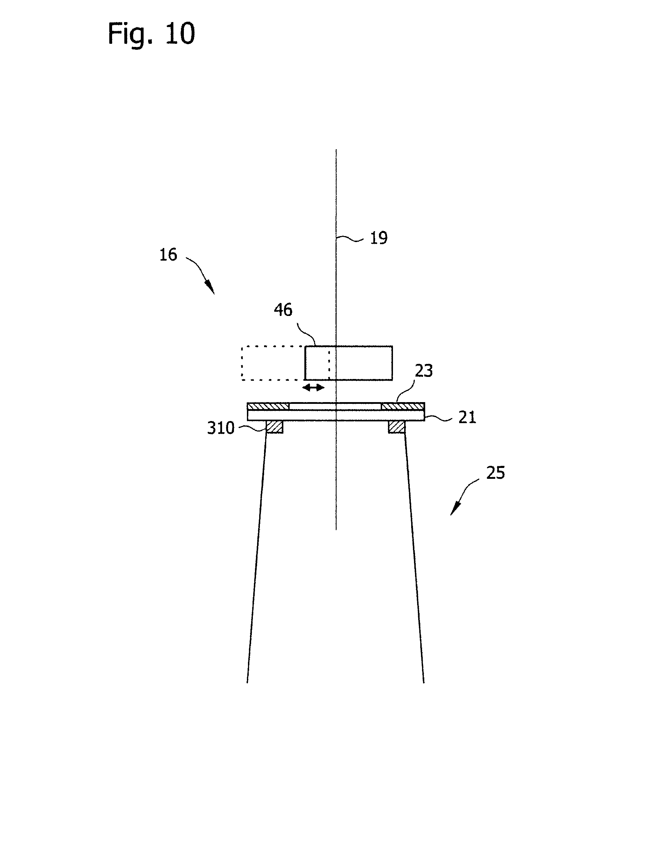

As shown in Fig. 10, one or more of gear box 46, or electric generator may be displaced to facilitate positioning of linking elements 19. For instance, the gear box may be placed on one side, for example to the left of the linking elements and the electric generator on the right side of the linking elements (not shown in the figures). Thereby, the center of gravity of the wind turbine would be disrupted minimally. As is indicated by the bi-directional arrow in Fig. 10, the displaced elements may be replaced after the hoisting process has terminated. Similarly, any other nacelle elements such as for instance the brake assembly, yaw system, converters, platforms or rotor shaft may be displaced to allow unhindered entry of linking elements into the tower section of a wind turbine.

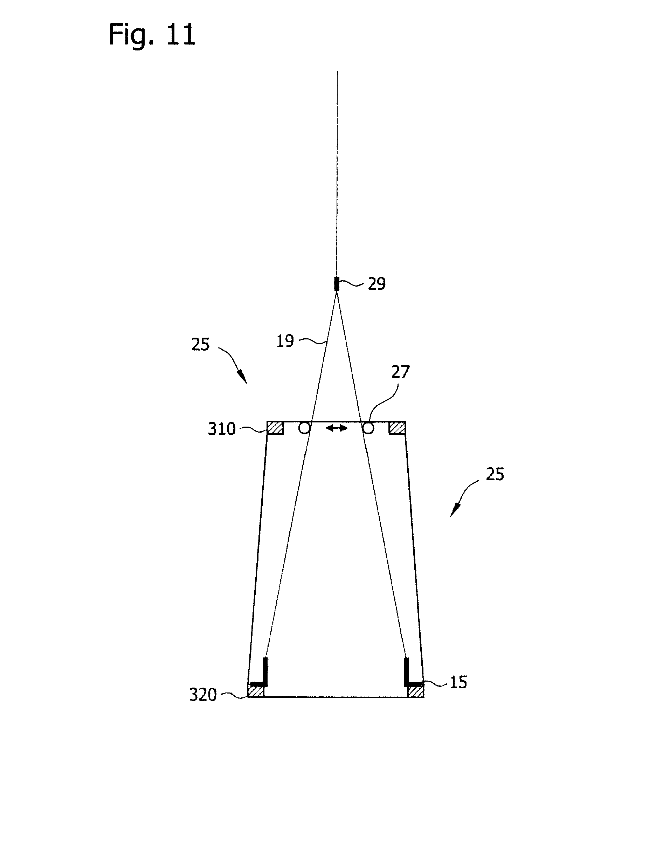

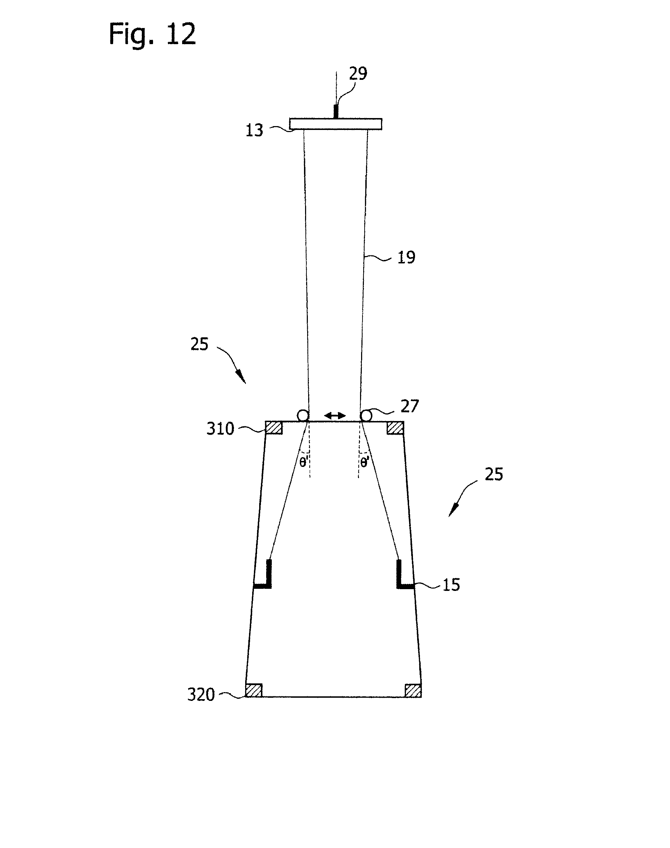

Fig. 11 and Fig. 12 are cross-sections of tower section 25, showing in more detail how linking elements 19 are positioned inside the tower section during hoisting of one or more tower sections of a wind turbine. According to some embodiments, the attaching elements are attached to a portion, for instance, a flange at the bottom of the one or more tower sections.

With respect to Fig. 11, lifting lugs 15 are attached, below the uppermost flange 310, to flange 320 of tower section 25. Guiding elements 27 are positioned below the top edge of tower section 25. As indicated by the arrows, according to some embodiments that can be combined with other embodiments, their horizontal position may be varied. Further, and not limited to any particular embodiment described herein, the guiding elements or linking elements may be interconnected inside or above a tower section or possibly inside or above the nacelle of a wind turbine (not shown in the figs) such that guiding may take place without touching the tower, nacelle or any other machinery of the wind turbine. Furthermore, guiding elements may also be positioned at the top edge of one or more tower sections. Linking elements 19 are attached to a single hook 29 of the lifting crane.

Fig. 12 shows another embodiment, wherein lifting lugs 15 are positioned between uppermost flange 310 and lower flange 320 of tower section 25. In embodiments where more than one tower section, which are attached to each other, are hoisted, lifting lugs 15 may also be positioned inside a lower tower section thereof and attached, for instance, to a lower flange.

Attaching lifting lugs 15 between lower 320 and upper 310 flange of tower section 25 results in routing angle theta prime (θ'). Since the weight of a wind turbine tower sections is generally high, large forces act on the linking elements. Hence, guiding elements 27 may be positioned at the top edge of tower section 25 to reduce angle theta prime (θ'), thereby ensuring that linking elements 19 are safely guided from spreader 13 to lifting lugs 15.

Figs. 13 to 16 show non-limiting examples of attachment possibilities of lifting lugs 15 to a flange. Furthermore a variety of lifting lugs are shown that may be employed during hoisting. Figs. 13 and 14 show examples of lifting lugs 15 attached to flange 320 of the wind turbine tower sections from underneath. Furthermore, Figs. 13 and 14 show embodiments where different types of lifting lugs are employed depending on the pull force direction exerted on them by the linking elements.

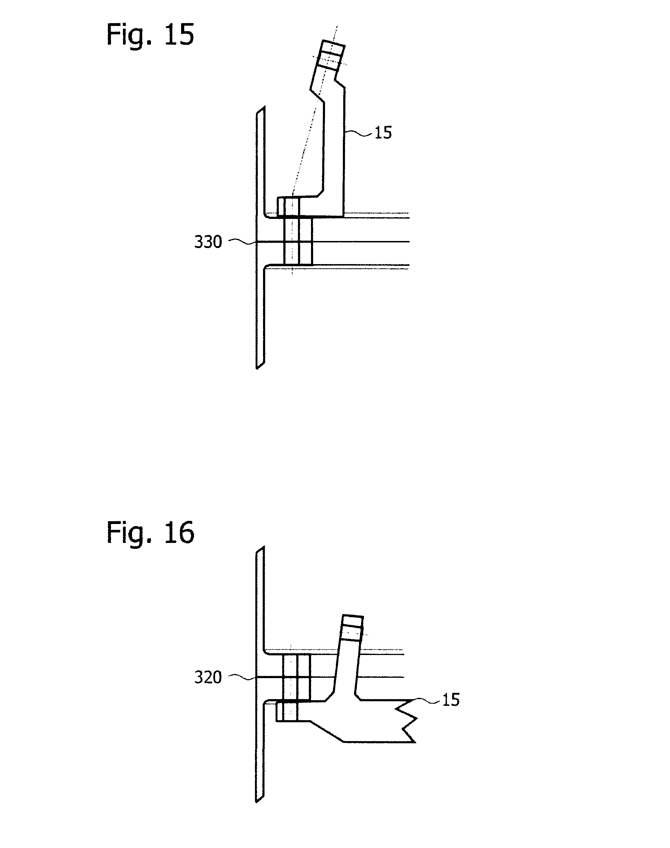

Fig. 15 shows an embodiment where lifting lugs 15 are attached to flange 330 from above. Fig. 16 shows another embodiment where lifting lugs 15, attached to flange 320, are in the shape of a cross bar, which provides extra stability and acts as stiffening element during the hoisting process.

Figs. 17 and 18 are non-limiting examples of guiding elements 27 attached to wind turbine tower section 25 at flange 310 or 320 respectively. Fig. 17 shows two separate guiding elements 27 removably attached to tower section 25. Guiding elements 27 have one or more guiding grooves on either side to provide for different positions of the linking elements. Furthermore, means for securing the linking elements in the grooves may be for instance shackle elements 21 that are permanently or removably attached to guiding elements 27. Shackle elements 21 may further include a fast lock- and opening mechanism to allow for rapid positioning of the linking elements. Fig. 18 shows and embodiment for the use of a single guiding element 27 during the hoisting process.

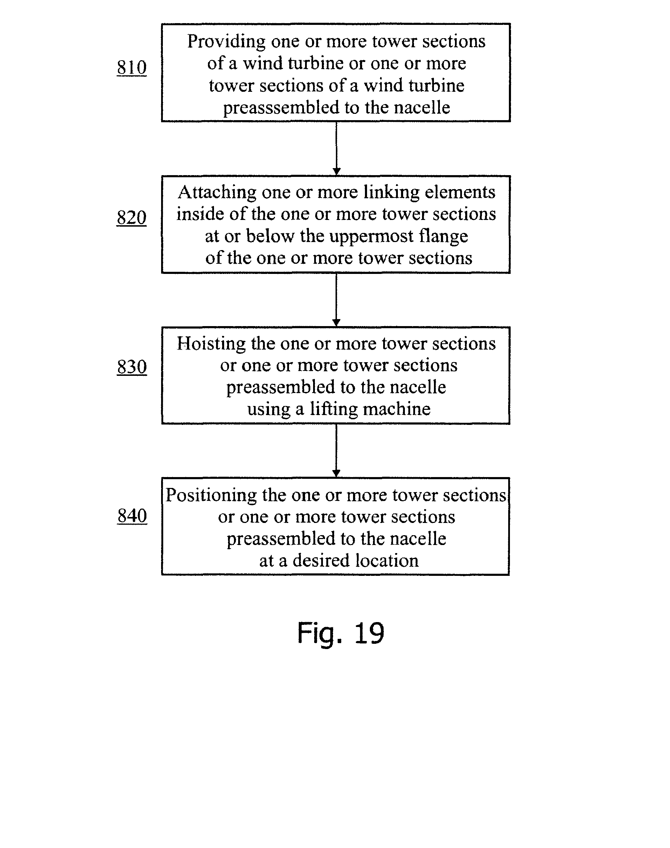

Fig. 19 is a flow chart of a method for hoisting one or more tower sections of a wind turbine or one or more tower sections of a wind turbine preassembled to the nacelle in on- or offshore environments. In block 810, one or more tower sections of a wind turbine or one or more tower sections of a wind turbine preassembled to the nacelle are provided. Linking elements are attached to a wind turbine tower section at or below the uppermost flange of the uppermost tower section, in block 820. The one or more tower sections of a wind turbine or one or more tower sections of a wind turbine preassembled to the nacelle may be in a lying down or in an upright position. If the one or more tower sections of a wind turbine or one or more tower sections of a wind turbine preassembled to the nacelle are in a lying down position, before the hoisting process and according to embodiments of the method herein, the one or more tower sections of a wind turbine or one or more tower sections of a wind turbine preassembled to the nacelle are brought into an upright position. In block 830 the one or more tower sections of a wind turbine or one or more tower sections of a wind turbine preassembled to the nacelle are hoisted by the use of a hoisting machine such as for instance a lifting crane. Finally, in block 840 the one or more tower sections of a wind turbine or one or more tower sections of a wind turbine preassembled to the nacelle are brought to their desired location, where final installation or anchorage to the foundation occurs.

The above-described systems and methods may facilitate an improved, efficient and cost effective hoisting method for assembling, maintaining or disassembling on- and offshore wind turbines.

Exemplary embodiments of systems and methods for hoisting a wind turbine or, one or more tower sections thereof are described above in detail. The systems and methods are not limited to the specific embodiments described herein, but rather, components of the systems and/or steps of the methods may be utilized independently and separately from other components and/or steps described herein. For example, to lift one or more structures of a vertical wind turbine from the bottom section or below the uppermost flange of the vertical wind turbine or, uppermost flange of the uppermost one or more tower sections thereof, and hence are not limited to practice with only the wind turbine systems as described herein. Rather, the exemplary embodiment can be implemented and utilized in connection with many other rotor blade applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. While various specific embodiments have been disclosed in the foregoing, those skilled in the art will recognize that the spirit and scope of the claims allows for equally effective modifications. Especially, mutually non-exclusive features of the embodiments described above may be combined with each other. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A method for hoisting one or more tower sections of a wind turbine, wherein said one or more tower sections include an uppermost flange, the method comprising:
   a) attaching one or more linking elements inside of said one or more tower sections below the uppermost flange; and
   b) hoisting said one or more tower sections using a hoisting machine that is connected with said one or more tower sections by said one or more linking elements.
2. The method according to clause 1, wherein said one or more tower sections include three tower sections preassembled to each other.
3. The method according to any preceding clause, wherein said one or more tower sections are brought into an upright position before being hoisted.
4. The method according to any preceding clause, wherein said one or more linking elements are guided by one or more guiding elements.
5. The method according to any preceding clause, wherein said one or more linking elements are attached to said one or more tower sections via one or more attaching elements that are permanently or removably attached to said one or more tower sections.
6. The method according to any preceding clause, wherein said attaching elements are permanently or removably attached to a flange of said one or more tower sections.
7. The method according to any preceding clause, wherein said attaching elements are attached to a lowermost flange of said one or more tower sections.
8. The method according to any preceding clause, wherein said one or more linking elements are chosen from any one or more of lifting cables, chains, slings, and rods.
9. The method according to any preceding clause, further comprising using a spreader that stabilizes said one or more tower sections and provides distances between said linking elements.
10. The method according to any preceding clause, wherein said one or more tower sections are hoisted from a transport vessel by said hoisting machine in offshore environments.
11. The method according to any preceding clause, wherein said one or more tower sections are hoisted by said hoisting machine in onshore environments.
12. The method according to any preceding clause, wherein a plurality of said one or more tower sections are hoisted in series to produce a wind farm.
13. A wind turbine tower section including a flange and one or more attaching elements, wherein said attaching elements are attached on the inside of said tower section below an uppermost flange.
14. Tower section according to any preceding clause, wherein said attaching elements are attached from underneath to a flange inside of said tower section, such that during hoisting a compression force is exerted on said attaching elements by said flange.
15. A method for hoisting one or more tower sections of a wind turbine preassembled to a nacelle, wherein said one or more tower sections include an uppermost flange, comprising:
   a) attaching one or more linking elements inside of said one or more tower sections at or below said uppermost flange; and
   b) hoisting said one or more tower sections preassembled to said nacelle using a hoisting machine that is connected with said one or more tower sections by said one or more linking elements.
16. The method according to any preceding clause, wherein said one or more linking elements are guided by means of guiding elements that are positioned at, at least one of the following positions: the outside of said nacelle; the inside of said nacelle; the top edge of said one or more tower sections; and below the top edge of said one or more tower sections.
17. The method according to any preceding clause, wherein said one or more linking elements are attached to said one or more tower sections via one or more attaching elements that are permanently or removably attached to the flange of said one or more tower sections.
18. The method according to any preceding clause, wherein said attaching elements are attached to a lowermost flange of said one or more tower sections.
19. The method according to any preceding clause, wherein a plurality of said one or more tower sections preassembled to said nacelle are hoisted in series by a single hoisting machine to produce a wind farm.
20. The method according to any preceding clause, wherein said one or more tower sections preassembled to said nacelle are hoisted from a transport vessel by said hoisting machine in offshore environments.

## Claims

1. A method for hoisting one or more tower sections (12, 25) of a wind turbine (10), wherein linking elements (19) are attached below the uppermost flange (310, 320, 330, 340) of said one or more tower sections (12, 25) or hoisting one or more tower sections (12, 25) of a wind turbine (10) preassembled to a nacelle (16), wherein linking elements (19) are attached at or below the uppermost flange (310, 320, 330, 340) of said one or more tower sections (12, 25), comprising:
attaching said one or more linking elements (19) inside of said one or more tower sections (12, 25); and
hoisting said one or more tower sections (12, 25) or one or more tower sections (12, 25) preassembled to a nacelle (16) using a hoisting machine (130) that is connected with said one or more tower sections (12, 25) by said one or more linking elements (19).

2. The method according to claim 1, wherein said one or more tower sections (12, 25) includes three tower sections (25) preassembled to each other.

3. The method according to any of the preceding claims, wherein said one or more tower sections (12, 25) or said one or more tower sections (12, 25) preassembled to a nacelle (16) are brought into an upright position before being hoisted.

4. The method according to any of the preceding claims, wherein said one or more linking elements (19) are chosen from any one or more of cables, chains, slings or any one or more hoisting aids such as rods or cross bars.

5. The method according to any of the preceding claims, wherein said linking elements (19) are guided by one or more guiding elements (27).

6. The method according to any of the preceding claims, wherein said one or more linking elements (19) are attached to said one or more tower sections (12, 25) via one or more attaching elements (15) that are permanently or removably attached to said one or more tower sections (12, 25).

7. The method according to any of the preceding claims, wherein said attaching elements (15) are permanently or removably attached to a flange (310, 320, 330, 340) of said one or more tower sections (12, 25).

8. The method according to any of the preceding claims, wherein said attaching elements (15) are permanently or removably attached to a lowermost flange (320, 330, 340) of said one or more tower sections (12, 25).

9. The method according to any of the preceding claims, wherein a spreader (13) that provides distances between said linking elements and stabilizes said one or more tower sections (12, 25) or said one or more tower sections (12, 25) preassembled to a nacelle (16) is used during hoisting.

10. The method according to any of the preceding claims, wherein said hoisting machine (130) comprises a single-hook hoisting system (29).

11. The method according to any of the preceding claims, wherein said one or more tower sections (12, 25) or said one or more tower sections (12, 25) preassembled to a nacelle (16) are hoisted from a transport vessel (120) by said hoisting machine (130) in offshore environments.

12. The method according to any of the preceding claims, wherein said one or more tower sections (12, 25) or said one or more tower sections (12, 25) preassembled to a nacelle (16) are hoisted by said hoisting machine (130) in onshore environments.

13. The method according to any of the preceding claims, wherein a plurality of said one or more tower sections (12, 25) or said one or more tower sections (12, 25) preassembled to a nacelle (16) are hoisted in series to produce a wind farm.

14. A wind turbine tower section (25) including a flange (310, 320, 330, 340) and one or more attaching elements (15), wherein said attaching elements (15) are attached on the inside of said tower section (25) below an uppermost flange (310, 320, 330, 340).

15. The wind turbine tower section (25) according to claim 14, wherein said attaching elements (15) are attached from underneath to a flange inside of said tower section (25), such that during hoisting a compression force is exerted on said attaching elements (15).
